# EUROPEAN PATENT APPLICATION

(11) **EP 2 901 933 A1**
(43) Date of publication of application: **05.08.2015**
(21) Application number: 13841776.1
(22) Date of filing: 20.09.2013
(51) Int. Cl.: A61B 6/03, G06T 1/00

(54) **IMAGE PROCESSING DEVICE, METHOD, AND PROGRAM**

(30) Priority: 27.09.2012 JP 2012213619
(71) Applicant: FUJIFILM Corporation, Tokyo 106-8620 (JP)
(72) Inventor: LI, Yuanzhong, Tokyo 107-0052 (JP)
(74) Representative: Klunker . Schmitt-Nilson . Hirsch
(86) International application number: PCT/JP2013/005556
(87) International publication number: WO 2014/050044

(57) **Abstract**

[Aim] To shorten required processing time and reduce a memory amount for operations when an area is extracted from an image by using a graph cut method.

[Solution Means] An image obtainment unit (10) obtains plural CT images from an X-ray CT apparatus (2), and generates a three-dimensional image (M0). A low-resolution image generation unit (12) performs multi-resolution transformation on the three-dimensional image (M0), and generates a low resolution image (ML). A first extraction unit (14) extracts a specific area, such as the liver region, from the low resolution image (ML) by using a graph cut method. An outline area setting unit (16) sets the outline of the liver region extracted from the low resolution image (ML) in the three-dimensional image (M0), and sets an outline area including the outline in the three-dimensional image (M0). A second extraction unit (18) extracts the outline of the liver region from the outline area, and also extracts the liver region from the three-dimensional image (M0).

## Description

### BACKGROUND OF THE INVENTION

### Field of the Invention

The present invention relates to an image processing apparatus, method and program that extracts an area from an image by using a graph cut method.

### Description of the Related Art

High resolution three-dimensional images with high qualities became used in recent years by an advance in medical equipment (for example, a multi-detector CT or the like). Here, since a three-dimensional image is composed of many two-dimensional images, and the information amount of the three-dimensional image is large, doctors need time in some cases to find a desirable observation region and to perform diagnosis. Therefore, efficient diagnosis has been attempted by improving the recognition characteristics of a whole organ and a lesion. For that purpose, an organ of interest is recognized, and the organ of interest is extracted from a three-dimensional image including the organ of interest and MIP display or the like is performed, for example, by using a maximum value projection method (MIP method), a minimum value projection method (MinIP method) and the like, or volume rendering (VR) display of a three-dimensional image is performed, or a CPR (Curved Planer Reconstruction) display is performed.

Further, various techniques for extracting an organ from a three-dimensional image have been proposed. For example, Patent Document 1 proposes a technique for generating a three-dimensional image of a specific region of an organ by extracting the specific region from many two-dimensional images constituting the three-dimensional image, and by piling up the extracted regions.

However, since the technique disclosed in Patent Document 1 extracts areas from two-dimensional images, slightly different ranges of area are extracted from the two-dimensional images in some cases. Therefore, the accuracy in extraction of the area is not very high when the area is viewed as a three-dimensional image.

Meanwhile, a graph cut method is known as a technique for extracting a desirable area from an image (please refer to Non-Patent Document 1). In the graph cut method, a graph composed of node Nij representing each pixel in an image, nodes S, T representing whether each pixel is in a target area or in a background area, n-link that is a link connecting nodes of adjacent pixels to each other, and s-link and t-link that are links connecting node Nij representing each pixel to node S representing the target area and to node T representing the background area is generated. Further, whether each pixel is a pixel in the target area or a pixel in the background area is represented by the thickness (the magnitude of a value) of its s-link, t-link and n-link. Further, the target area is extracted from the image by dividing the image into the target area and the background area based on the thickness of the links obtained as a result of operations. It is possible to accurately extract a region, such as the heart, the lung and the liver, included in a medical three-dimensional image by using the graph cut method as described above.

### [Related Technical Documents]

### [Patent Document]

[Patent Document 1]
Japanese Unexamined Patent Publication No. 2003-010172

### [Non-Patent Document 1]

Y.Y. Boykov and M. Jolly, "Interactive Graph Cuts for Optimal Boundary & Region Segmentation of Objects in N-D Images", Proceedings of "International Conference on Computer Vision", Vancouver, Canada, Vol. I, pp. 105-112, 2001

### SUMMARY OF THE INVENTION

However, when an area is extracted from an image by using a graph cut method, the number of pixels and the number of links increase as the size of an image that is an operation target increases. Therefore, a memory required for processing and time for processing increase. When the graph cut method is applied especially to a three-dimensional image, the number of pixels and the number of links exponentially increase, compared with a two-dimensional image. Therefore, extremely long time is needed to extract a desirable area by using the graph cut method. Further, when a computer of low specification with a low capacity memory is used, extraction of an area may not be possible in some cases by using the graph cut method.

In view of the foregoing circumstances, it is an object of the present invention to reduce processing time necessary for extracting an area from an image by using the graph cut method, and to reduce a memory amount for operations.

An image processing apparatus of the present invention extracts a specific area from a processing target image by using a graph cut method. The apparatus includes a first extraction means that generates a low resolution image of the processing target image, and extracts the specific area from the low resolution image by using the graph cut method, an outline area setting means that sets, in the processing target image, an outline area including an outline of the specific area in the processing target image based on a result of extracting the specific area, and a second extraction means that extracts an area corresponding to the specific area from the outline area by using the graph cut method.

In the image processing apparatus of the present invention, the outline area setting means may determine the size of the outline area based on a difference in resolution between the low resolution image and the processing target image.

Further, in the image processing apparatus of the present invention, the outline area setting means may set the outline area by an erosion operation and a dilation operation of morphology operations.

Further, in the image processing apparatus of the present invention, the second extraction means may increase a value of an s-link in the graph cut method for a pixel that is present inside the outline of the specific area in the outline area, and increase a value of a t-link in the graph cut method for a pixel that is present outside the outline of the specific area in the outline area.

An image processing method of the present invention extracts a specific area from a processing target image by using a graph cut method. The image processing method generates a low resolution image of the processing target image, and extracts the specific area from the low resolution image by using the graph cut method. Further, the image processing method sets, in the processing target image, an outline area including an outline of the specific area in the processing target image based on a result of extracting the specific area, and extracts an area corresponding to the specific area from the outline area by using the graph cut method.

Further, the image processing method of the present invention may be provided as a program for causing a computer to execute the image processing method.

According to the present invention, a low resolution image of a processing target image is generated, and a specific area is extracted from the low resolution image by using a graph cut method. Here, since the number of pixels in the low resolution image is less than the number of pixels in the processing target image, it is possible to reduce the operation amount and the memory to be used. However, the accuracy in extraction of the area is not very high. Therefore, according to the present invention, an outline area including an outline of the specific area in the processing target image is set in the processing target image based on a result of extracting the specific area. Further, an area corresponding to the specific area is extracted from the outline area by using the graph cut method. As described above, in the present invention, the specific area is extracted by applying the graph cut method only to the low resolution image and to the outline area in the processing target image. Therefore, it is possible to greatly reduce time for processing and to greatly reduce a memory amount for operations, compared with a case in which the graph cut method is applied to the whole processing target image.

### BRIEF DESCRIPTION OF THE DRAWINGS

Figure 1 is a schematic block diagram illustrating the configuration of an image processing apparatus according to an embodiment of the present invention;
Figure 2 is a diagram for explaining multi-resolution transformation;
Figure 3 is a diagram for explaining a graph cut method;
Figure 4 is a diagram for explaining area segmentation by using the graph cut method;
Figure 5 is a diagram illustrating the outline of a liver region extracted from a low resolution image;
Figure 6 is a diagram illustrating a state in which an outline of the liver region extracted from the low resolution image has been set in a three-dimensional image;
Figure 7 is a diagram illustrating structuring elements in morphology operations;
Figure 8 is a diagram illustrating an outline area set in three-dimensional image M0;
Figure 9 is a diagram illustrating an outline of a liver region extracted from a three-dimensional image;
Figure 10 is a flowchart illustrating processing performed in embodiments of the present invention; and
Figure 11 is a diagram illustrating an extracted liver region.

### DESCRIPTION OF THE PREFERRED EMBODIMENTS

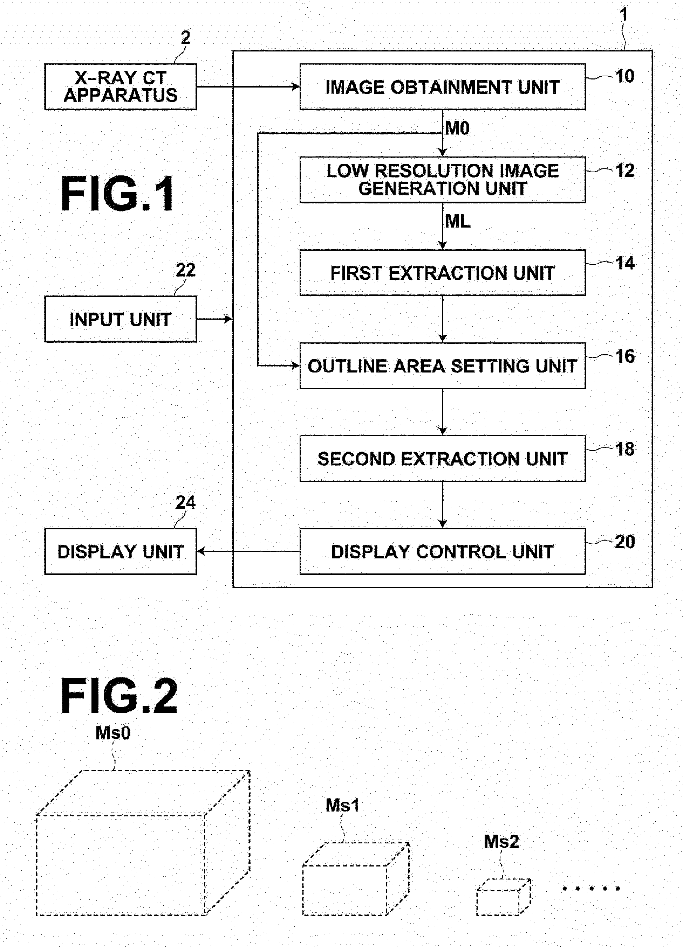

Next, embodiments of the present invention will be described with reference to drawings. Figure 1 is a schematic block diagram illustrating the configuration of an image processing apparatus according to an embodiment of the present invention. Here, the configuration of an image processing apparatus 1 illustrated in Figure 1 is realized by executing, in a computer (for example, a personal computer or the like), a program that has been read in an auxiliary storage device (not illustrated). Further, this program is stored in an information storage medium, such as a CD-ROM, or distributed through a network, such as the internet, and installed in the computer.

The image processing apparatus 1 generates three-dimensional image M0 from plural two-dimensional images imaged, for example, by an X-ray CT apparatus 2, and automatically extracts a specific area included in this three-dimensional image M0 by using a graph cut method. The image processing apparatus 1 includes an image obtainment unit 10, a low-resolution image generation unit 12, a first extraction unit 14, an outline area setting unit 16, a second extraction unit 18 and a display control unit 20. Further, an input unit 22 and a display unit 24 are connected to the image processing apparatus 1. In the embodiment of the present invention, it is assumed that three-dimensional image M0 represents a thoracoabdominal region of a human body, and a specific area is a liver region.

The image obtainment unit 10 obtains plural CT images (two-dimensional images) imaged, for example, by the X-ray CT apparatus 2, and generates three-dimensional image M0 from the plural two-dimensional images. Here, it is not necessary that the image obtainment unit 10 obtains the CT images. The image obtainment unit 10 may obtain two-dimensional images, such as so-called MRI images, RI images, PET images and X-ray images. Alternatively, three-dimensional image M0 may be generated in the X-ray CT apparatus 2, and the image obtainment unit 10 may perform only processing for obtaining three-dimensional image M0.

The low-resolution image generation unit 12 performs multi-resolution transformation on three-dimensional image M0, as illustrated in Figure 2, and generates plural three-dimensional multi-resolution images Msi (i=0 through n) of different resolutions. Here, i=0 means the same resolution as the resolution of three-dimensional image M0, and i=n means a lowest resolution. In the embodiment of the present invention, a specific area is extracted from a low resolution image, as will be described later. The resolution of the low resolution image is determined based on the actual size for one pixel of three-dimensional image M0. For example, when the actual size per pixel of three-dimensional image M0 is 0.5 mm, the low-resolution image generation unit 12 generates, as low resolution image ML, three-dimensional multi-resolution image Ms2 the resolution of which is 1/4 of the resolution of three-dimensional image M0.

The first extraction unit 14 extracts the liver region from low resolution image ML by performing area segmentation on the liver region and regions other than the liver region in low resolution image ML by using a graph cut method. Specifically, the first extraction unit 14 sets the liver region, as a target area, and regions other than the liver region, as a background area. Further, the first extraction unit 14 sets discrimination areas in predetermined pixel size at the positions of all pixels in low resolution image ML, and divides the discrimination area into a target area and a background area by using a graph cut method.

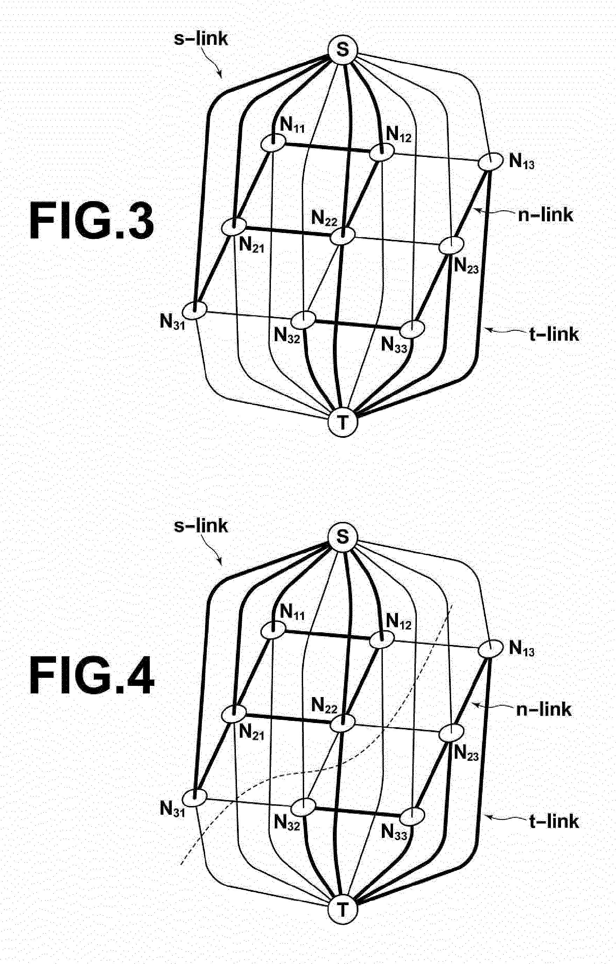

In the graph cut method, first, a graph composed of node Nij representing each pixel in a discrimination area, nodes S, T representing a label (a target area or a background area in the present embodiment) assignable to each pixel, n-link that is a link connecting nodes of adjacent pixels to each other, and s-link and t-link that are links connecting node Nij representing each pixel to node S representing the target area and to node T representing the background area is generated, as illustrated in Figure 3. Here, for the purpose of simplifying explanations, a two-dimensional area of 3×3 is set as a discrimination area in Figure 3.

Here, n-link represents a probability that adjacent pixels are pixels in the same area by the thickness of the link. It is possible to calculate the value of probability based on a distance between the adjacent pixels and a difference in the pixel values of the adjacent pixels.

Further, s-link connecting node Nij representing each pixel and node S representing a target area to each other represents a probability that each pixel is a pixel included in the target area. Further, t-link connecting a node representing each pixel and node T representing a background area to each other represents a probability that each pixel is a pixel included in the background area. If information about whether a pixel represents a target area or a background area has already been given, it is possible to set the value of probability about the pixel based on the given information. If such information has not been given, the value of probability about the s-link may be set by estimating a target area, and by setting the value of probability based on a histogram of distribution of density of the estimated target area. Regarding the t-link, a background area may be estimated, and the value of probability may be set based on a histogram of distribution of density of the estimated background area.

Here, if pixels represented by nodes N11, N12, N21, N22 and N31 are pixels set in the target area in Figure 3, an s-link connecting each node N11, N12, N21, N22 and N31 to node S is thick, and an n-link connecting N11, N12, N21, N22 and N31 to each other is thick. Meanwhile, if pixels represented by nodes N13, N23, N32 and N33 are pixels set in the background area, a t-link connecting each node N13, N23, N32 and N33 to node T is thick, and an n-link connecting N13, N23, N32 and N33 to each other is thick.

Further, a target area and a background area are exclusive to each other. Therefore, it is possible to divide a discrimination area into the target area and the background area by separating node S from node T by cutting an appropriate link or links of an s-link, a t-link and an n-link, for example, as indicated by a broken line in Figure 4. Here, optimum area segmentation is possible by cutting so that the total of the values of probability of all the s-link, t-link and n-link that are cut becomes smallest.

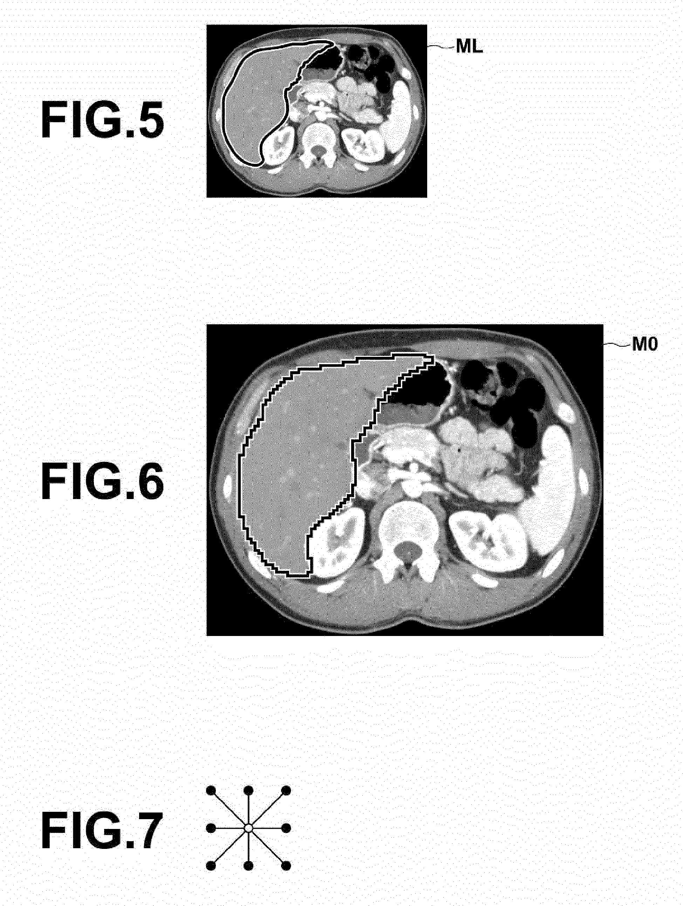

The first extraction unit 14 performs area segmentation on low resolution image ML, as described above, and extracts a liver region, which is a target area, from low resolution image ML. Figure 5 is a diagram illustrating the outline of the liver region extracted from the low resolution image. In the embodiment of the present invention, the liver region is extracted from three-dimensional low resolution image ML. However, for the purpose of explanation, the outline of the liver region extracted from a low resolution image of one of two-dimensional images constituting three-dimensional image M0 is indicated by a solid line.

The outline area setting unit 16 sets an outline area including the outline of the liver region extracted by the first extraction unit 14 in three-dimensional image M0. Figure 6 is a diagram illustrating a state in which the outline of the liver region extracted from low resolution image ML by the first extraction unit 14 is set in three-dimensional image M0. Here, for the purpose of explanation, the outline of the liver region set in one of the two-dimensional images constituting three-dimensional image M0 is indicated by a solid line. In the embodiment of the present invention, the resolution of low resolution image ML is 1/4 of the resolution of three-dimensional image M0. Therefore, the outline of the liver region extracted from low resolution image ML is magnified 4 times, and set in three-dimensional image M0. Therefore, the set outline does not perfectly coincide with the outline of the liver region included in three-dimensional image M0, and includes an uneven portion based on a difference in resolution.

The outline area setting unit 16 erodes the outline set in three-dimensional image M0 toward the inside, and also dilates the outline set in three-dimensional image M0 toward the outside, and sets an area surrounded by the dilated outline and the eroded outline, as outline area E0. Here, the size of outline area E0 in the width direction (i.e., a direction perpendicular to the outline) is determined based on the size of low resolution image ML and the size of three-dimensional image M0 by an operation of (Size of Three-Dimensional Image M0 / Size of Low Resolution Image ML +1) x 2. In the present embodiment, Size of Three-Dimensional Image M0 / Size of Low Resolution Image ML=4. Therefore, the size of the range of outline area E0 is determined as 10 pixels. Here, the technique for determining the size of outline area E0 is not limited to the aforementioned technique, but an arbitrary technique may be adopted.

Here, in the present embodiment, erosion and dilation of the outline is performed by morphology operations. Specifically, the outline is eroded by one pixel by performing an erosion operation in which a minimum value is probed by using a structuring element, as illustrated in Figure 7, in a predetermined width with a pixel of interest on the outline set in three-dimensional image M0, as a center. Further, the outline is further eroded by performing an erosion operation with respect to the eroded outline. The outline set in three-dimensional image M0 is eroded toward the inside by four pixels by performing such an erosion operation four times.

Further, the outline is dilated by one pixel by performing a dilation operation in which a maximum value is probed by using the structuring element, as illustrated in Figure 7, in a predetermined width with the pixel of interest on the outline set in three-dimensional image M0, as a center. Further, the outline is further dilated by performing a dilation operation with respect to the dilated outline. The outline set in three-dimensional image M0 is dilated toward the outside by five pixels by performing such a dilation operation five times.

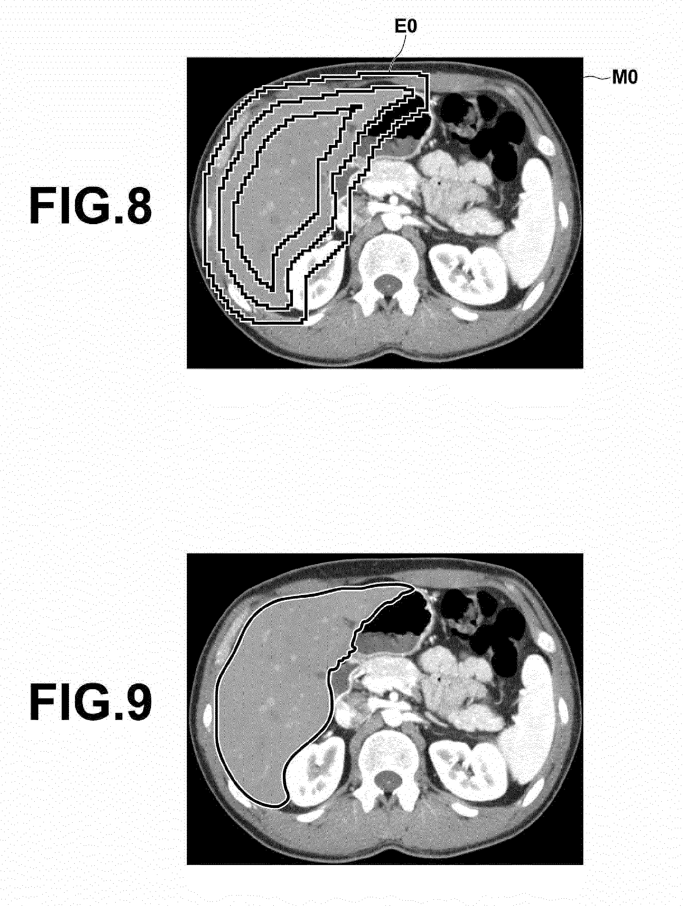

Then, the outline area setting unit 16 sets an area surrounded by the dilated outline and the eroded outline, as outline area E0. Figure 8 is a diagram illustrating an outline area set in three-dimensional image M0. Here, the outline has been eroded by four pixels toward the inside by erosion operations, and dilated by five pixels toward the outside by dilation operations. Therefore, the size of outline area E0 in the width direction is ten pixels by addition of one pixel that is the pixel of the outline.

The second extraction unit 18 divides outline area E0 set in three-dimensional image M0 into a liver region and a region other than the liver region by performing area segmentation by using a graph cut method. Further, the second extraction unit 18 extracts, based on the result of area segmentation, the whole liver region from three-dimensional image M0. Here, a probability that an inside area of the outline in outline area E0 is the liver region is high, and a probability that an outside area of the outline in outline area E0 is a background area is high. Therefore, when a graph cut method is applied to outline area E0, the value of t-link is increased as a pixel is located farther from the set outline toward the outside in outline area E0, and the value of s-link is increased as a pixel is located farther from the set outline toward the inside in outline area E0. Accordingly, it is possible to efficiently and accurately divide outline area E0 into the liver region and the other region.

The second extraction unit 18 performs area segmentation on outline area E0, as described above, and extracts a liver region, which is a target area, from outline area E0. Figure 9 is a diagram illustrating the outline of the liver region extracted from outline area E0. In the present embodiment, the liver region is extracted from three-dimensional image M0. However, for the purpose of explanation, the outline of the liver region extracted from one of two-dimensional images constituting three-dimensional image M0 is indicated by a solid line. As illustrated in Figure 9, the outline of the liver region obtained by performing area segmentation on outline area E0 of three-dimensional image M0 smoothly connects the surface of the liver.

Further, the second extraction unit 18 extracts, as the liver region, the inside area of the outline extracted from outline area E0 in three-dimensional image M0.

The display control unit 20 displays the extracted liver region or the like on the display unit 24.

The input unit 22 is, for example, a keyboard, a mouse or the like. The input unit 22 inputs various instructions by a user, such as a radiologic technologist, to the image processing apparatus 1.

The display unit 24 is, for example, a liquid crystal display, a CRT display or the like. The display unit 24 displays an image of the extracted liver region or the like, if necessary.

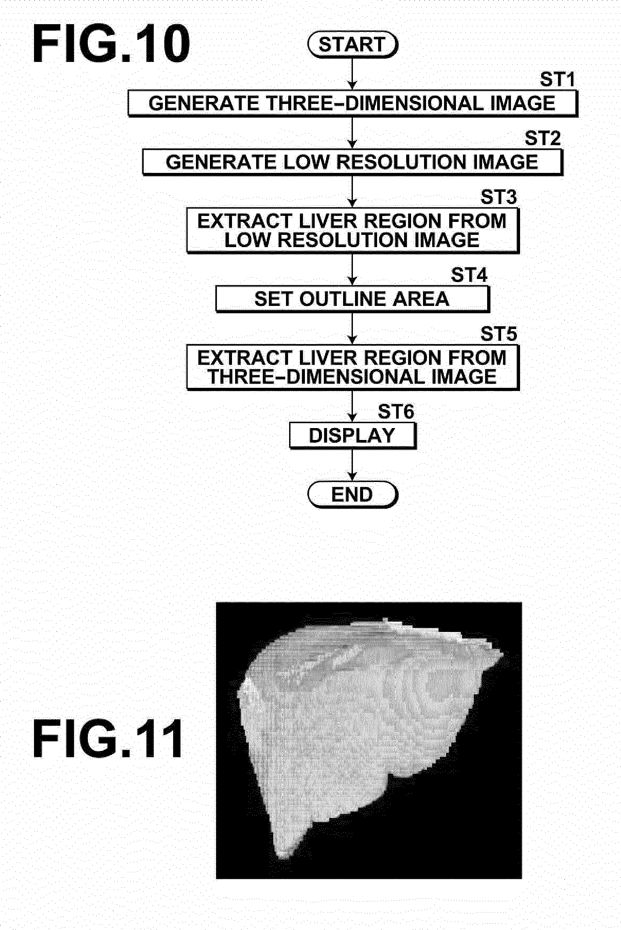

Next, processing performed in the embodiment of the present invention will be described. Figure 10 is a flowchart illustrating processing performed in embodiments of the present invention. First, the image obtainment unit 10 obtains plural CT images from the X-ray CT apparatus 2, and generates three-dimensional image M0 (step ST1). Then, the low-resolution image generation unit 12 performs multi-resolution transformation on three-dimensional image M0, and generates low resolution image ML (step ST2). Further, the first extraction unit 14 extracts the liver region from low resolution image ML (step ST3).

Then, the outline area setting unit 16 sets the outline of the liver region extracted from low resolution image ML in three-dimensional image M0, and sets outline area E0 in three-dimensional image M0 by performing an erosion operation and a dilation operation, as described above (step ST4). Then, the second extraction unit 18 extracts the outline of the liver region from outline area E0, and also extracts the liver region from three-dimensional image M0 (step ST5). Further, the display control unit 20 displays the extracted liver region on the display unit 24 (step ST6), and processing ends.

Figure 11 is a diagram illustrating the displayed liver region. As illustrated in Figure 11, it is recognizable that the liver region is accurately extracted according to the embodiment of the present invention.

As described above, according to the embodiment of the present invention, low resolution image ML of three-dimensional image M0 is generated, and a specific area, such as the liver region, is extracted from low resolution image ML by using a graph cut method. Here, the number of pixels of low resolution image ML is less than the number of pixels of three-dimensional image M0. For example, when the resolution of low resolution image ML is 1/4 of the resolution of three-dimensional image M0, the number of pixels of low resolution image ML is 1/64 of the number of pixels of three-dimensional image M0. Therefore, the use of low resolution image ML can reduce an operation amount and a memory to be used. However, the accuracy in extraction of an area is not very high. Therefore, in the embodiment of the present invention, outline area E0 including the outline of the liver region extracted from low resolution image ML is set in three-dimensional image M0, and the liver region is extracted from outline area E0 by using a graph cut method. Here, as illustrated in Figure 7, the size of outline area E0 is much smaller, compared with the size of three-dimensional image M0. As described above, in the embodiment of the present invention, the liver region is extracted by applying the graph cut method only to low resolution image ML of three-dimensional image M0 and outline area E0 of three-dimensional image M0. Therefore, it is possible to greatly reduce time for processing and a memory amount for operations, compared with a case in which the graph cut method is applied to the whole three-dimensional image M0.

In the aforementioned embodiment, the liver region is extracted from medical three-dimensional image M0. However, a region to be extracted is not limited to this region. It is possible to reduce a processing amount of operation and time for processing by applying the present invention to a case in which regions of various structures included in a medical three-dimensional image, such as the brain, the heart, the lung field, the pancreas, the spleen, the kidneys and blood vessels, are extracted.

Further, in the aforementioned embodiment, the liver region is extracted by applying the result of extracting an area in low resolution image ML, the resolution of which is 1/4 of the resolution of three-dimensional image M0, to three-dimensional image M0. Alternatively, the liver region may be extracted by setting an outline area in a low resolution image the resolution of which is 1/2 of the resolution of three-dimensional image M0 by using the result of extraction of an area in low resolution image ML. Further, the result of extraction of the area in the low resolution image the resolution of which is 1/2 of the resolution of three-dimensional image M0 may be applied to three-dimensional image M0. Specifically, setting of an outline area for an image the resolution of which is higher than the resolution of the low resolution image by one level and extraction of the liver region from the image the resolution of which is higher than the low resolution image by one level by using the result of extraction of the area in the low resolution image may be repeated till three-dimensional image M0, which is a processing target, and the liver region may be extracted from three-dimensional image M0.

Further, in the aforementioned embodiment, a medical three-dimensional image is a processing target. Alternatively, a medical two-dimensional image may be a processing target. Needless to say, the present invention may be applied not only to a medical image, but to extraction of an area, such as a person, from an image obtained by a digital camera or the like. Especially, since the pixel number of an image obtained by a digital camera is large in recent years, a large amount of operation is required to extract an area, such as a person, by using a graph cut method. When this invention is applied, it is possible to greatly reduce the processing amount of operation and time for processing.

Further, the present invention may be applied also to a case of extracting an area from a dynamic image. Since a dynamic image is composed of plural frames, an area may be extracted from each of the frames. However, since the image quality of an image included in each frame is low, it is impossible to accurately extract an area. Here, the dynamic image is regarded as a three-dimensional image in which plural frames are arranged along a time axis. When an area is extracted from a dynamic image, which is regarded as a three-dimensional image as described above, by using a graph cut method, it is possible to greatly reduce the processing amount of operation and time for processing. Further, it is possible to accurately extract the area from the dynamic image.

## Claims

1. An image processing apparatus that extracts a specific area from a processing target image by using a graph cut method, the apparatus comprising:
a first extraction means that generates a low resolution image of the processing target image, and extracts the specific area from the low resolution image by using the graph cut method;
an outline area setting means that sets, in the processing target image, an outline area including an outline of the specific area in the processing target image based on a result of extracting the specific area; and
a second extraction means that extracts an area corresponding to the specific area from the outline area by using the graph cut method.

2. The image processing apparatus, as defined in Claim 1, wherein the outline area setting means determines the size of the outline area based on a difference in resolution between the low resolution image and the processing target image.

3. The image processing apparatus, as defined in Claim 1 or 2, wherein the outline area setting means sets the outline area by an erosion operation and a dilation operation of morphology operations.

4. The image processing apparatus, as defined in any one of Claims 1 to 3, wherein the second extraction means increases a value of an s-link in the graph cut method for a pixel that is present inside the outline of the specific area in the outline area, and increases a value of a t-link in the graph cut method for a pixel that is present outside the outline of the specific area in the outline area.

5. An image processing method that extracts a specific area from a processing target image by using a graph cut method, the image processing method comprising:
generating a low resolution image of the processing target image, and extracting the specific area from the low resolution image by using the graph cut method;
setting, in the processing target image, an outline area including an outline of the specific area in the processing target image based on a result of extracting the specific area; and
extracting an area corresponding to the specific area from the outline area by using the graph cut method.

6. A program for causing a computer to execute an image processing method that extracts a specific area from a processing target image by using a graph cut method, the program causing the computer to execute the procedures of:
generating a low resolution image of the processing target image, and extracting the specific area from the low resolution image by using the graph cut method;
setting, in the processing target image, an outline area including an outline of the specific area in the processing target image based on a result of extracting the specific area; and
extracting an area corresponding to the specific area from the outline area by using the graph cut method.
